# EUROPÄISCHE PATENTSCHRIFT

(11) **EP 1 243 822 B1**
(45) Veröffentlichungstag und Bekanntmachung des Hinweises auf die Patenterteilung: **18.01.2006**
(21) Anmeldenummer: 01810295.4
(22) Anmeldetag: 22.03.2001
(51) Int. Cl.: F16K 1/30, F16K 1/52

(54) **Schnellanschlusssystem**
Quick connecting system
Système de connection rapide

(43) Veröffentlichungstag der Anmeldung: 25.09.2002
(73) Patentinhaber: Gebr. Gloor AG, 3401 Burgdorf (CH)
(72) Erfinder: Bernhard, Ernst, 2558 Aegerten (CH)
(74) Vertreter: Isler & Pedrazzini AG

(56) Entgegenhaltungen:
- EP-A- 0 108 972
- EP-A- 0 581 718
- EP-B- 0 788 591
- DE-A- 2 036 331
- GB-A- 2 038 970
- US-A- 3 337 244
- US-A- 5 586 748

## Beschreibung

Die vorliegende Erfindung bezieht sich auf das Gebiet der Schnellanschlusssysteme. Sie betrifft ein Schnellanschlusssystem gemäss dem Oberbegriff des Anspruchs 1.

Ein solches Schnellanschlusssystem für Flüssiggasflaschen ist beispielsweise aus der EP-B1-0 108 972 bekannt.

### STAND DER TECHNIK

Heutzutage ist der grösste Teil der Gasflaschen mit einem konventionellen Hahn versehen, in welchem mit Hilfe einer Spindel eine Dichtung auf ein entsprechendes Gegenstück gedrückt wird. Die erforderliche Schliesskraft wirkt gegen den Gasdruck, was sich ungünstig auf die Betätigungskraft am Handrad auswirkt. Der Hahn ist mit einem Seitenstutzen mit Gewinde ausgerüstet, an welchem ein Druckreduzierventil angeschlossen wird. Durch diese Bauweise ragt das Druckreduzierventil über den Durchmesser der Flasche hinaus und ist bei einem Sturz der Flasche sehr exponiert. Ein weiterer Nachteil ist, dass beim Anschliessen einer Flasche ein Anschluss an den Flaschenhahn gemacht werden muss, welcher beim Öffnen schlagartig mit bis zu 300 bar belastet wird.

Neuerdings gelangen Gasflaschen auf den Markt, welche anstelle des normalen Hahnes ein zentrisch aufgebautes, komplettes Druckreduzierventil haben. Der Vorteil ist, dass anstelle eines Hochdruckanschlusses eine Steckkupplung im Niederdruckbereich anzuschliessen ist. Ein solches komplettes flaschenseitiges Druckreduzierventil hat jedoch Nachteile:
- Hohe Investitionskosten
- Druckreduktionsteil und Anzeigeinstrumente sind dauernd auf der Flasche
- Auf der Baustelle sind sie der Witterung und dem rauhen Umgang ausgesetzt, auf dem Transport ständigen Vibrationen und Erschütterungen.

Es ist daher in der eingangs genannten Druckschrift EP-B1-0 108 972 ein Schnellanschlusssystem für Gasflaschen vorgeschlagen worden, bei dem das Druckreduzierventil bzw. das Druckregelventil aufgeteilt ist. Das eigentliche Ventil befindet sich in einem in den Hals der Gasflasche dauerhaft einschraubbaren Einsatz, der nur in axialer Richtung über die Flasche hinausragt. Auf diesen Einsatz wird in axialer Richtung lösbar einrastend ein Aufsteckregler aufgesteckt, der eine Regelvorrichtung, z.B. eine federbelastete Membran, umfasst und über einen in den Ventileinsatz hineinreichenden Steuerstift das Ventil betätigt. Als Einrastmechanismus wird dabei ein Kugelklemmring verwendet, dessen Kugeln in eine umlaufende Rille am äusseren Umfang des Ventileinsatzes einrücken und verriegelt werden. Auch bei dieser Lösung liegt anwenderseitig nur der vergleichsweise niedrige reduzierte Arbeitsdruck vor. Gleichzeitig ist der ständig an der Flasche verbleibende Teil des Reduzierventils auf ein Minimum beschränkt und weitgehend geschützt gegen äussere Einwirkungen.

Soll ein solches Schnellanschlusssystem mit geteiltem Druckreduzierventil bei Druckgasflaschen eingesetzt werden, die unterschiedliche Arten von Gasen (Sauerstoff, Stickstoff, Wasserstoff, Helium etc.) enthalten können, ist es allein schon aus Sicherheitsgründen unabdingbar, Massnahmen zu treffen, damit die jeweiligen Gasflaschen nur mit den für sie vorgesehenen Aufsätzen verbunden werden.

So ist z.B. in der EP-B1-0 788 591 bei einem Schnellanschlusssystem die Verwendung einer Codierung vorgeschlagen worden, bei der eine bestimmte konvex verzahnte Aussenform am Aufsteckteil (Fig. 8) zu einer entsprechend konkav verzahnten Innenform am Flaschenteil passen muss. Eine solche Codierung ist jedoch vergleichsweise aufwendig in der Herstellung. Darüber hinaus sind die Innen- und Aussenformen vergleichsweise exponiert und können im rauhen Alltagsbetrieb relativ leicht beschädigt werden, was zu einer Fehlfunktion der Codierungsmittel führen kann. Weiterhin sind die in der EP-B1-0 788 591 offenbarten Codierungsmittel speziell auf die besondere Art des dortigen Verbindungsmechanismus abgestimmt, der ein Einhängen und einrastendes Einschwenken der Druckgasflasche vorsieht.

### DARSTELLUNG DER ERFINDUNG

Es ist daher Aufgabe der Erfindung, ein Schnellanschlusssystem zu schaffen, welches die Nachteile bekannter Schnellanschlusssysteme vermeidet, auf einfache Weise eine sichere Codierung ermöglicht, und sich insgesamt durch einen einfachen und funktionssicheren sowie leicht bedienbaren Anschluss- und Verriegelungsmechanismus auszeichnet.

Die Aufgabe wird durch die Gesamtheit der Merkmale des Anspruchs 1 gelöst. Der Kern der Erfindung besteht darin, in einer Doppelfunktion gleichzeitig zum Verriegeln und Codieren Verriegelungskugeln einzusetzen, die an einem der Teile in einer vorgegebenen Anordnung verteilt quer zur Verbindungsachse des Systems verschiebbar gelagert sind, und am anderen Teil einzelne Senkungen vorzusehen, welche bei zwei zueinander passenden Teilen dieselbe Anzahl und Anordnung aufweisen wie die Verriegelungskugeln. In diese Senkungen rücken die Verriegelungskugeln jeweils ein, wenn zwei zueinander passende Teile miteinander verbunden werden. Weiterhin ist ein Verriegelungselement vorgesehen, mit welchem die in die Senkungen eingerückten Verriegelungskugeln gegen ein Ausrücken verriegelbar sind. Die Verriegelungskugeln üben so nicht nur eine Codierungs- und Verriegelungsfunktion aus, sondern erleichtern durch ihr Abrollen auch den Verbindungsvorgang.

Eine erste bevorzugte Ausgestaltung der Erfindung ist dadurch gekennzeichnet, dass der erste Teil an seinem der Quelle abgewandten Ende einen zur Verbindungsachse konzentrischen zylindrischen Abschnitt aufweist, in dessen Umfangsfläche die Senkungen in radialer Richtung eingebracht sind, dass der zweite Teil an seinem der Quelle zugewandten Ende einen zur Verbindungsachse konzentrischen hohlzylindrischen Abschnitt aufweist, welcher über den zylindrischen Abschnitt des ersten Teiles geschoben werden kann und welcher radiale Bohrungen zur Aufnahme der Verriegelungskugeln umfasst, und dass als Verriegelungselement ein Verriegelungsring vorgesehen ist, welcher den hohlzylindrischen Abschnitt des zweiten Teiles konzentrisch umschliesst, und welcher in einer ersten Stellung ein radiales Ausrücken der Verriegelungskugeln aus den Senkungen ermöglicht und in einer zweiten Stellung ein radiales Ausrücken der Verriegelungskugeln aus den Senkungen verhindert. Durch die zylindrische Form der Teile ergibt sich eine vereinfachte Herstellung bei gleichzeitig verbesserter Bedienbarkeit und Funktionalität.

Grundsätzlich ist es ausreichend, wenn gemäss einer weiteren Ausgestaltung die Verriegelungskugeln auf einem Kreis um die Verbindungsachse angeordnet sind. Soll jedoch die Anzahl der Codierungsmöglichkeiten erhöht werden, ist es von Vorteil, wenn die Verriegelungskugeln auf mehreren in Richtung der Verbindungsachse hintereinander liegenden Kreisen um die Verbindungsachse angeordnet sind, und die korrespondierenden Verriegelungskugeln verschiedener Kreise nach einem vorgegebenen Schliessplan angeordnet sind. Um im Hinblick auf die Codierung eine eindeutige Zuordnung der beiden Teile sicherzustellen und so den Verbindungsvorgang zu erleichtern, ist es weiterhin von Vorteil, wenn an den beiden Teilen Indexierungsmittel vorgesehen sind, welche sicherstellen, dass die beiden Teile nur in bestimmten Winkelstellungen bezüglich einer Drehung um die Verbindungsachse miteinander verbindbar sind. Insbesondere können die Indexierungsmittel zwei gegenüberliegende parallele Indexierungslappen am zweiten Teil und zwei korrespondierende Flächen am ersten Teil umfassen.

Eine andere bevorzugte Ausgestaltung des Schnellanschlusssystems nach der Erfindung zeichnet sich dadurch aus, dass die Quelle eine im wesentlichen zylindrische Gasflasche ist, dass der erste Teil ein Flaschenteil ist, welcher mittels eines Gewindes in den Kopfteil der Gasflasche einschraubbar ist, derart dass die Verbindungsachse und die Zylinderachse der Gasflasche zusammenfallen, dass das System eine Vorrichtung zur Regelung bzw. Reduzierung des am verbraucherseitigen Ausgang anstehenden Arbeitsdruckes aufweist, welche Vorrichtung ein Ventil sowie mit dem Ventil zusammenwirkende Regelungsmittel umfasst, dass das Ventil im ersten Teil angeordnet ist und die Regelungsmittel im zweiten Teil untergebracht sind, und dass die Regelungsmittel über einen aus dem zweiten Teil in den ersten Teil hineinragenden Steuerstift mit dem Ventil in Wirkverbindung stehen.

Der Aufbau entspricht so im wesentlichen einem zweigeteilten Druckreduzierventil. Im Flaschenteil ist das Ventil, welches das Gas unter hohem Vordruck in der Flasche bei erreichtem Arbeitsdruck anhält und somit die Flasche wieder verschliesst. Dieses Ventil wird vom anderen Teil, dem Anwenderteil, durch die Regelungsmittel betätigt. Durch die Zweiteilung des Ventils werden dabei die Kosten für den Flascheneigentümer wesentlich kleiner als beim Aufbau eines Komplettventils.

Bevorzugt umfassen die Regelungsmittel eine Regelfeder und einen Regelkolben, welcher gegen den Druck der Regelfeder vom Arbeitsdruck beaufschlagt wird.

Ebenfalls bevorzugt ist am Regelkolben der Steuerstift befestigt, insbesondere angeformt.

Eine einfache und wirksame Einstellbarkeit wird erreicht, wenn gemäss einer anderen Ausgestaltung die Vorspannung der Regelfeder und damit der Arbeitsdruck über einen Verstellmechanismus mit einem Gewinde mittels eines am zweiten Teil drehbar angeordneten Einstellringes einstellbar ist.

Das Ventil selbst umfasst vorzugsweise einen Dichtungsring, welcher durch Druck aus der Gasflasche sowie durch den über einen Ventilstift mit Kegelpartie übertragenen Druck einer zusätzlichen Schliessfeder gegen einen mit einer Dichtkante versehenen Ring gedrückt wird.

Um einen sicheren Betrieb des Systems auch im rauhen Alltagsbetrieb zu gewährleisten, ist es von Vorteil, wenn gemäss einer anderen Ausgestaltung das Ventil einen in der Verbindungsachse liegenden, von ausserhalb des ersten Teiles zugänglichen Ventilstift umfasst, über welchen die Regelungsmittel mittels des Steuerstiftes auf das Ventil einwirken, und wenn an dem dem Steuerstift zugewandten Ende des Ventilstiftes ein Abschlussdeckel angeordnet ist, welcher das darunterliegende Ventil vor Verschmutzung schützt.

Weiterhin ist es für die Betriebssicherheit von Vorteil, wenn im zweiten Teil ein Ueberdruckventil angeordnet ist. Besonders einfach lässt sich das Ueberdruckventil realisieren und einstellen, wenn die Regelungsmittel eine Regelfeder umfassen, und wenn das Ueberdruckventil gegen die Kraft der Regelfeder öffnet, derart, dass das Ueberdruckventil durch die Kraft der Regelfeder eingestellt wird.

Auch ist es für die Bedienung zweckmässig, wenn am zweiten Teil eine von aussen betätigbare, auf den Steuerstift einwirkende Schalteinrichtung vorgesehen ist, mit welcher das Ventil geöffnet bzw. geschlossen werden kann.

Eine automatische Abdichtung ergibt sich beim Verbinden der beiden Teile, wenn im zweiten Teil ein als Kolben ausgebildeter Anschlussnippel vorgesehen ist, welcher nach dem Verbinden der beiden Teile und dem Oeffnen des Ventils durch den Arbeitsdruck nach aussen abdichtend gegen eine Dichtung am ersten Teil gepresst wird.

Um ein unbefugtes Befüllen der Gasflaschen durch den Verbraucher zu verhindern, ist es weiterhin von Vorteil, wenn der mit dem Steuerstift des zweiten Teils erreichbare Oeffnungshub des Ventils begrenzt ist, und wenn innerhalb des in der Gasflasche befindlichen Endes des ersten Teils ein mit dem Ventil in Wirkverbindung stehender Umschaltkolben angeordnet ist, welcher ein Befüllen der Gasflasche nur dann ermöglicht, wenn das Ventil einen den Oeffnungshub deutlich übersteigenden Hub durchläuft.

Ein weitere vorteilhafte Sicherung gegen die Verunreinigung von Gasen mit Wasser, wie sie beispielsweise bei der Getränkeaufbereitung durch Rücklauf von Wasser in eine vorher geleerte Flasche verursacht werden kann, ergibt sich dadurch, dass gemäss einer weiteren Ausgestaltung in der Wirkverbindung zwischen dem Ventil und dem Umschaltkolben ein wasserempfindlicher Einsatz vorgesehen ist, welcher ein Oeffnen des Umschaltkolbens zum Befüllen der Flasche generell verhindert, wenn er mit Wasser in Berührung gekommen ist.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem Längsschnitt ein erstes bevorzugtes Ausführungsbeispiel eines Schnellanschlusssystems nach der Erfindung mit einem auf einen Flaschenteil einrastend aufgesteckten Anwenderteil;
- Fig. 2: die beiden Teile aus Fig. 1 im nicht verbundenen Zustand mit einer Explosionsansicht der Verriegelungskugeln in perspektivischer Darstellung;
- Fig. 3: in einer zu Fig. 1 vergleichbaren Darstellung ein zweites bevorzugtes Ausführungsbeispiel eines Schnellanschlusssystems nach der Erfindung mit verkleinerten Aussenabmessungen;
- Fig. 4: die Teile aus Fig. 3 in einer zu Fig. 2 vergleichbaren Darstellung;
- Fig. 4a: den vegrössert dargestellten Anwenderteil aus Fig. 4 mit abgenommenem Verriegelungs- und Schaltring;
- Fig. 4b: in der Draufsicht von vorn die Zuordnung des Verriegelungs- und Schaltrings zu den Verriegelungskugeln; und
- Fig. 5: in einem vergrösserten Ausschnitt das Ventil aus Fig. 1 mit verschiedenen eingezeichneten Hüben.

### WEGE ZUR AUSFÜHRUNG DER ERFINDUNG

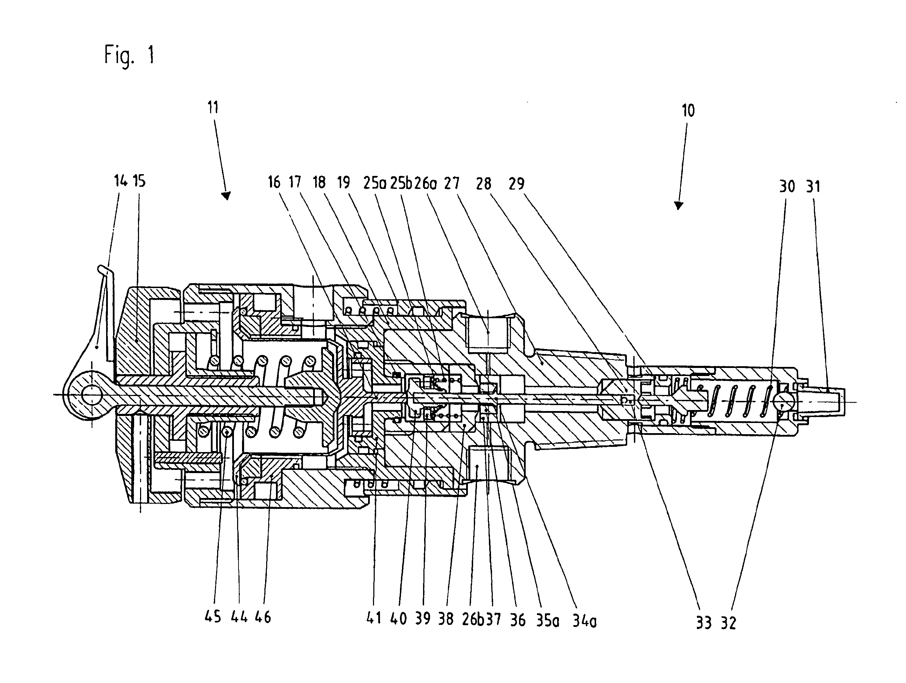

In Fig. 1 ist in einem Längsschnitt ein erstes bevorzugtes Ausführungsbeispiel eines Schnellanschlusssystems nach der Erfindung mit einem auf einen Flaschenteil 10 einrastend aufgesteckten Anwenderteil 11 dargestellt. Beide Teile 10, 11 haben eine zylindrische Grundform, deren Zylinderachse mit der Achse der Druckflasche zusammenfällt und gleichzeitig die Verbindungsachse bildet, entlang derer die beiden Teile einrastend zusammengesteckt werden bzw. sind.

Der Flaschenteil 10 hat ein Hauptstück 27 mit einem (konischen oder zylindrischen) Gewinde, mit welchem es in den Hals der (nicht dargestellten) Druckflasche einschraubbar ist. Durch das Innere des Flaschenteil 10 läuft eine axiale Bohrung mit abgestuftem Innendurchmesser, durch welche das Gas aus der Druckflasche in den Anwenderteil 11 austritt. Im aus der Druckflasche herausragenden Teil des Flaschenteils 10 ist in der Bohrung das eigentliche Ventil angeordnet, das aus einem Ring 38 mit oberer Dichtkante, einem gegen die Dichtkante drückenden Dichtungsring 36, einem den Dichtungsring 36 aufnehmenden Vierkantkolben 37 und einem durch das Ventil hindurchgehenden Ventilstift mit Kegelpartie 34a besteht. Auf dem nach aussen vorstehenden Ende des Ventilstiftes 34a ist ein Abschlussdeckel 40 angeordnet, der die Bohrung mit dem Ventil weitgehend abschliesst. Im Bereich des Abschlussdeckels 40 hat der Flaschenteil 10 einen zylindrischen Abschnitt, über den der Anwenderteil 11 mit einem hohlzylindrischen unteren Teil 18 geschoben ist. Im unteren Teil 18 des Anwenderteils 11 ist in axialer Richtung verschiebbar ein als Kolben ausgebildeter Anschlussnippel 41 angeordnet, der bei anliegendem Arbeitsdruck im Anwenderteil 11 nach aussen dichtend gegen einen im Flaschenteil untergebrachten O-Ring 17 gedrückt wird. Der Anschlussnippel 41 umschliesst konzentrisch einen Steuerstift 16, der am Boden eines becherförmigen Ueberdruckventils 44 angeformt ist. Das Ueberdruckventil 44 sitzt mit einem Flansch dichtend in einem Regelkolben 46. Ueberdruckventil 44 und Regelkolben 46 werden mit dem Druck einer Regelfeder 45 beaufschlagt, die im Anwenderteil 11 untergebracht ist. Die Vorspannung der Regelfeder 45 kann durch Verdrehen eines Druckeinstellringes 15 im Zusammenhang mit einer Gewindeanordung verändert werden. Ueberdruckventil 44 und Regelkolben 46 können durch einen Schaltmechanismus vom Druck der Regelfeder 45 entlastet werden. Der Schaltmechanismus umfasst im dargestellten Ausführungsbeispiel einen Betätigungshebel 14 mit einer exzentrischen Ablauffläche.

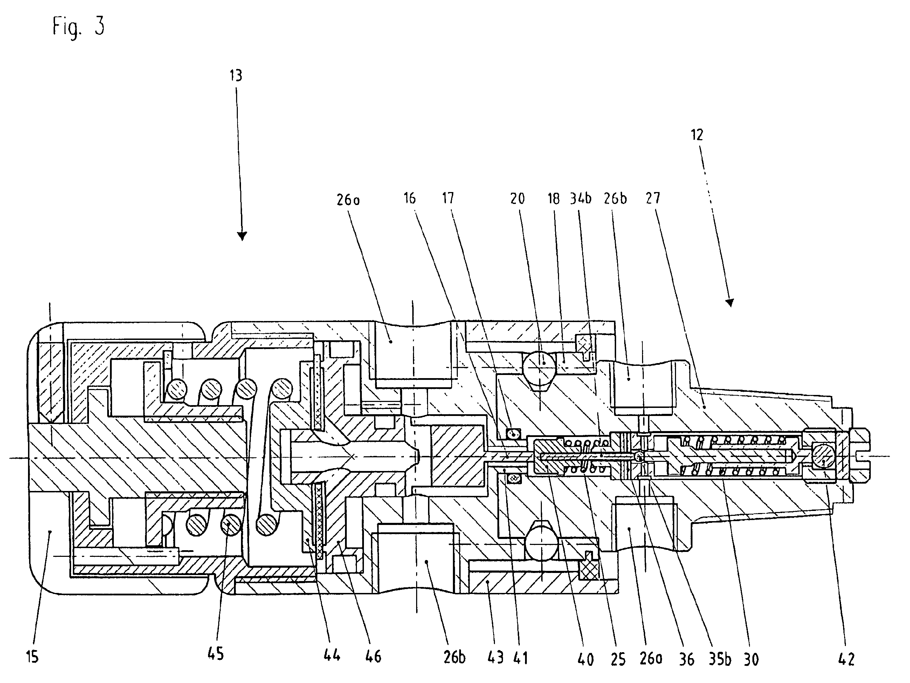

Am inneren Ende des Flaschenteils 10 ist in der zentralen Bohrung ein in axialer Richtung verschiebbarer Umschaltkolben 29 angeordnet, der, nur wenn er gegen den Druck einer Feder voll ins Innere der Gasflasche zurückgeschoben ist, ein Befüllen der Gasflasche ermöglicht. Der Umschaltkolben 29 kann von aussen über den Ventilstift 34a und einen am Ende aufgesetzten Kegel 28 betätigt werden. Zwischen dem Kegel 28 und dem Ende des Ventilstiftes 34a ist ein wasserempfindlicher Einsatz 33 angeordnet, der, sobald er mit Wasser bzw. wasserhaltigem Gas in Berührung kommt, aufweicht und es damit einer Schliessfeder 30 ermöglicht, den Kegel 28 weiter nach aussen zu drücken. Den Abschluss des inneren Endes bildet eine Rückschlagventilkugel 32 und ein Sintermetallfilter 31. Auf der Höhe des Ventils 34a, 35a, 36, 37, 38 (Ventilkugel 35b in Fig. 3) sind im Flaschenteil 10 (12 in Fig. 3) zwei radiale Bohrungen 26a und 26 b angeordnet, die einen Druckindikator für die Anzeige des Flaschendruckes und eine Berstscheibe als Sicherheitselement aufnehmen können.

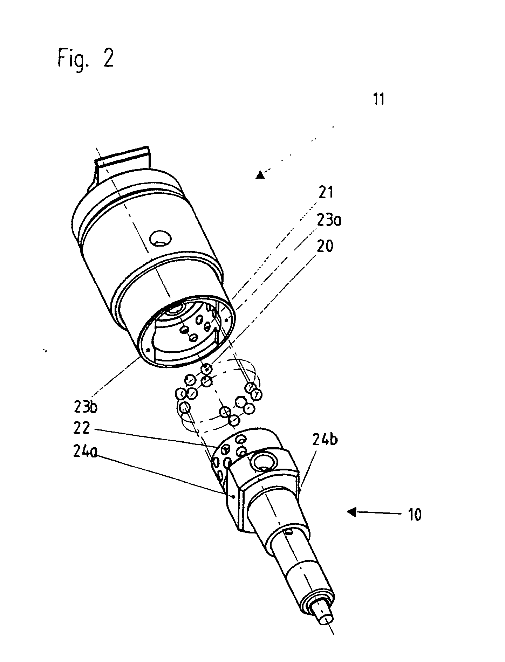

Die Codierungs- und Verriegelungsfunktion wird von einer Mehrzahl von Verriegelungskugeln 20 übernommen (Fig. 2), die in radialen Bohrungen 21 im unteren Teil 18 des Anwenderteils 11 in radialer Richtung verschiebbar gelagert sind. Im dargestellten Ausführungsbeispiel sind insgesamt 12 Verriegelungskugeln 20 auf zwei in axialer Richtung hintereinander liegenden Kreisen angeordnet. Im zylindrischen Endabschnitt des Flaschenteils 10 sind für die Verriegelungskugeln 20 entsprechende radiale Senkungen 22 in die Umfangsfläche eingebracht. Wenn die beiden Teile 11 und 10 ineinandergesteckt werden, rollen die Verriegelungskugeln 20 über die Umfangsfläche des zylindrischen Endabschnittes und rücken - sofern die codierte Anordnung der Senkungen 22 mit der codierten Anordnung der Bohrungen 21 bzw. Verriegelungskugeln 20 übereinstimmt - in die Senkungen 22 ein. Wenn alle Verriegelungskugeln 20 in die zugehörigen Senkungen eingerückt sind, kann ein den unteren Teil 18 des Anwenderteils 11 konzentrisch umschliessender Verriegelungsring 19 über die Verriegelungskugeln 20 gleiten und diese im eingerückten Zustand verriegeln. Damit im Hinblick auf die Codierung eine eindeutige Zuordnung zwischen den beiden Teilen 10 und 11 gewährleistet ist, sind Indexierungsmittel vorgesehen, welche sicherstellen, dass die beiden Teile 10, 11 nur in bestimmten Winkelstellungen bezüglich einer Drehung um die Verbindungsachse miteinander verbindbar sind. Diese Indexierungsmittel umfassen im Ausführungsbeispiel der Fig. 2 zwei gegenüberliegende parallele Indexierungslappen 23a,b am zweiten Teil 11 und zwei korrespondierende Flächen 24a,b (für eine Schlüsselweite) am ersten Teil 10.

Die Konstruktion des Flaschenteils 10 ist für eine automatische Befüllung der Gasflasche optimiert. Durch die axial angeordnete Anschlussöffnung ist die Zugänglichkeit optimal. Öffnen und Schliessen der Flasche sowie Überprüfung von Dichtigkeit bzw. Zustand des Ventils und Inhalt der Flasche können in einem automatischen Zyklus erfolgen (Heute werden die meisten Flaschen einzeln abgefüllt. Weil der Anschluss seitlich am Hahn ist, ist eine komplizierte Einrichtung notwendig für eine Automatisierung. Zudem wird eine motorisch angetriebene Einrichtung für das Öffnen und Schliessen des Hahns benötigt).

Selbst bei manueller Befüllung ist das hier beschriebene System sehr einfach und rationell. Dabei wird ein Füllkopf aufgesteckt, welcher - gesichert durch die Codierung - nur das Befüllen der Flasche mit dem richtigen Gas zulässt. Ob beim Befüllen von Einzelflaschen oder mehreren Flaschen in einem Korb, können die Füllköpfe einfach auf die Flaschen gesteckt und der automatische Füllzyklus gestartet werden. Dabei spielt es keine Rolle, wie gross die Flaschen sind. Die Zugänglichkeit bleibt optimal. Nicht benutzte Füllköpfe hängen am Schlauch und stellen keine Gefahr dar. Dadurch, dass sie nicht an eine Flasche angeschlossen sind, bleiben sie verschlossen; es tritt kein Gas aus. Bei einem automatisierten Füllzyklus sowie auf einer vollautomatischen Füllanlage bestehen folgende Möglichkeiten:
- Öffnen der Flasche
- Prüfen des Restdruckes, falls dieser fehlt → Abbruch → Prüfen von Flasche und Ventil auf Beschädigung
- Analysieren des Gases, bei Unreinheit oder Feuchtigkeit → Abbruch → Flasche evakuieren und trocknen
- Füllen der Flasche
- Ventil schliessen
- Dichtigkeit prüfen
- Verbindung entspannen zum Entkuppeln des Füllkopfes (bei nicht entspannter Verbindung kann der Füllkopf nicht entkuppelt werden)

Der Anwenderteil 11 enthält die notwendigen Teile zum Messen und Regulieren des Nachdruckes (Arbeitsdruckes), die Schaltvorrichtung mit dem Betätigungshebel 14 zum Öffnen und Schliessen, sowie ein Anschlussgewinde für die Verbindung zum Verbraucher. Optional gibt es eine Einrichtung mit Druckanzeige zum Verstellen des Arbeitsdruckes, einen Durchflusswähler oder ein Flowmeter. Bei diesem Aufbau gibt es keinen Hochdruckanschluss. Kein Teil des Anwenderteiles 11 wird dem Hochdruck der Flasche ausgesetzt, was grosse Sicherheitsvorteile bringt. Bei jeder Fehlmanipulation an den Armaturen wird die Flasche automatisch durch die Schliessfeder 30 und das Ventil 34a, 35a, 36, 37, 38 (35b in Fig. 3) verschlossen; der Schliessvorgang wird unterstützt durch den Gasdruck. Wenn bei einem Sturz der Flasche Teile der Armaturen oder die ganzen Armaturen weggebrochen werden, verhindern die Ventilteile 28, 30 (bzw. die Overflowkugel 42 in Fig. 3) im Innern des Flaschenhalses ein unkontrolliertes Ausströmen des Gases. Diese letztgenannten Sicherheitsmassnahmen können selbstverständlich nicht nur bei einem Schnellanschlusssystem gemäss der vorliegenden Erfindung, sondern auch bei herkömmlichen Flaschenhähnen bzw. -anschlüssen mit Vorteil eingesetzt werden.

Zum Aufsetzen des Anwenderteiles 11 wird der Verriegelungsring 19 nach oben geschoben. Dadurch werden die Verriegetungskugeln 20 frei, welche in bestimmter Anzahl in bestimmter Position angebracht sind. Nun kann der Anwenderteil 11 wie bei einer Schnellkupplung auf den Flaschenteil 10 aufgesteckt werden. Dabei ist keine Kraft erforderlich, wie dies bei bekannten Schnellkupplungen üblich ist. Die beiden Indexierungslappen 23a,b erlauben das endgültige Aufstecken nur in 2 Positionen, die um je 180° versetzt sind. Dies ist auch optisch ersichtlich und erlaubt eine eindeutige Positionierung der Teile 10, 11 für das einwandfreie Funktionieren der Codierung. Als Gegenpart zu den Indexierungslappen 23a,b dienen die zwei Flächen 24a,b der Schlüsselweite am Flaschenteil 10.

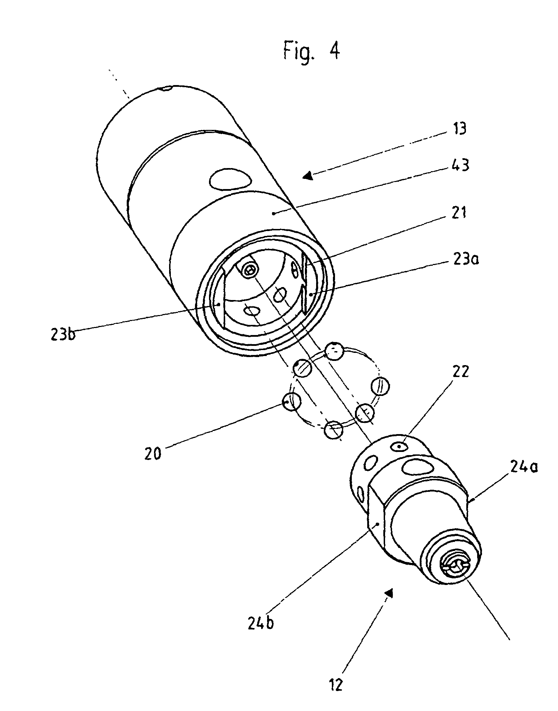

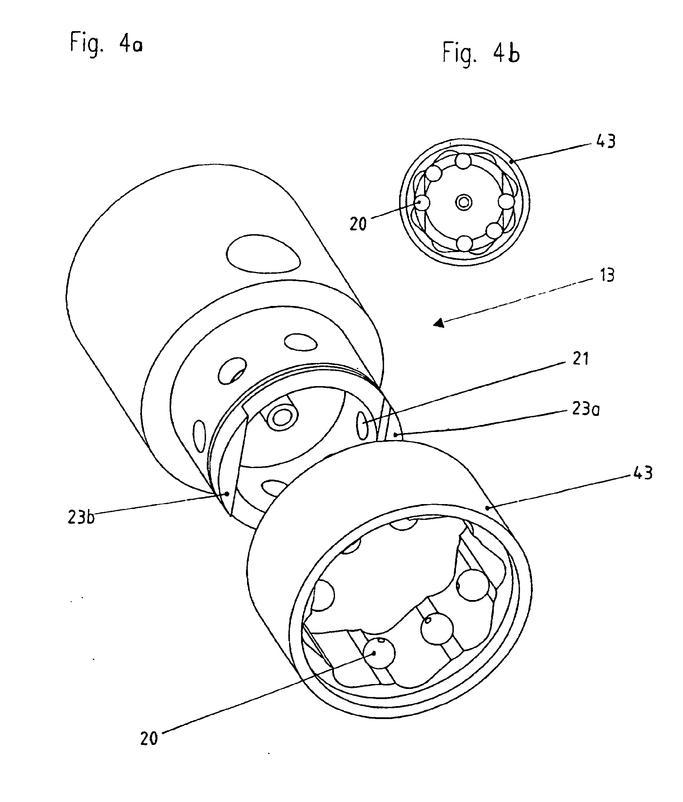

Wie bereits oben beschrieben besitzen Anwenderteil 11 und Flaschenteil 10 gassortenabhängige fest zugeteilte Codes. Der Flaschenteil 10 erhält an der Anschlusspartie kleine Senkungen 22 (anstelle von umlaufenden Nuten wie bei gewöhnlichen Steckkupplungen) für die Verriegelungskugeln 20 in bestimmter Position, Höhe und Anzahl. Der Anwenderteil 11 führt die Verriegelungskugeln 20 in Bohrungen 21, in ebenfalls bestimmter Position, Höhe und Anzahl. Bei der Standardausführung für grosse Flaschen sind zwei Kugelreihen übereinander vorgesehen; für ein Minianschlusssystem mit verringerter Anzahl Kugeln (Fig. 3, 4) können dagegen nur noch eine geringe Anzahl Codes erreicht werden. Es besteht die Möglichkeit, einzelne, gegenüberliegende Kugelpaare in der Höhe zu versetzen, um mehr Codes zu erreichen. Nur bei Übereinstimmung aller Kriterien lässt sich der Verriegelungsring 19 nach unten schieben und lässt sich die Flasche durch die Schaltvorrichtung öffnen.

Beim Versuch, eine falsche Gasflasche anzuschliessen, lässt sich der Verriegelungsring 19 nicht nach unten schieben, weil mindestens zwei oder mehr Verriegelungskugeln 20 des Anwenderteiles 11 in keine Versenkung 22 des Flaschenteiles 10 einrücken können, weil die Codes nicht übereinstimmen. Somit ist auch die Schaltmechanik für das Öffnen wirkungslos.

Bei Anschluss einer richtigen Gasflasche kann der Verriegelungsring 19 nach unten geschoben werden, die Verriegelungskugeln 20 rücken in ihre Versenkungen 22 ein, und die Flasche lässt sich mit der Schaltmechanik öffnen. Dabei werden direkt über Mechanik oder durch Federkraft (je nach Ausführung des Anwenderteiles 11) Anschlussnippel 41 oder Steuerstift 16 nach unten gedrückt. Der Steuerstift 16 drückt auf den Abschlussdeckel 40 im Flaschenteil 10. Am Ende seiner Führungsbohrung drückt der Abschlussdeckel 40 nach unten auf den Ventilstift 34a, welcher durch Federdruck und Gasdruck nach oben gedrückt wird und dabei mit einer Kegelpartie 35, welche am Ventilstift angebracht ist, den doppelten Dichtungsring 36 gegen den Ring 38 mit der oberen Dichtkante drückt und abdichtet.

Sobald der Ventilstift 34a nach unten verschoben wird, steigt im ganzen Hohlraum oberhalb des Ventils 35a, 36, 37, 38 (bzw. der Ventilkugel 35b in Fig. 3) der Druck.

Dadurch wird der Anschlussnippel 41, welcher als Kolben ausgebildet ist, im unteren Teil 18 des Anwenderteils 11 nach unten gedrückt bis in seine endgültige, dichte Lage. Der O-Ring 17 für einen dichten Anschluss ist im Flaschenteil 10 eingebaut und kann somit bei jeder Befüllung im Werk überprüft werden. Über den Verstellmechanismus mit Gewinde kann der Arbeitsdruck am Einstellring 15 eingestellt werden.

Soll eine noch volle Flasche wieder entkoppelt werden, wird die Schalteinrichtung (Betätigungshebel 14) betätigt, wodurch der Steuerstift 16 das Ventil im Flaschenteil 10 nicht mehr öffnen kann. Auf diese Weise ist ein sofortiges Schliessen der Flasche möglich. Anstelle des Betätigungshebels 14 kann aber auch ein Ring zum Betätigen vorgesehen werden. Nach Ablassen des restlichen Druckes aus der Verbindung (Schlauch, Leitung und Gerät) wird der Anschlussnippel 41 entspannt. Somit kann der spannungsfrei gewordene Verriegelungsring 19 nach oben geschoben werden, wodurch die Verriegelungskugeln 20 aus ihrer verriegelten Position ausrücken und der Anwenderteil 11 leicht von der Flasche entfernt werden kann (bei nicht entspannter Verbindung kann der Verriegelungsring 19 nur unter grosser Kraftanwendung nach oben geschoben werden).

Bei einer nicht gezeichneten Ausführungsvariante ist ein Manometer für den Arbeitsdruck angebaut.

Ebenfalls kann der Anwenderteil 11 mit einem Durchflusswähler oder Flowmeter ausgerüstet werden.

In der seitlichen (Gewinde-)Bohrung 26a des Flaschenteiles 10 kann ein Druckindikator (nicht gezeichnet) eingebaut werden, welcher den Füllzustand auch bei nicht angeschlossener Flasche anzeigt. Damit erhält man den Überblick über die noch vollen Reserveflaschen. In der zweiten, gegenüberliegenden (Gewinde-)Bohrung 26b kann eine Berstscheibe (nicht gezeichnet) eingeschraubt werden, welche bei Überdruck anspricht.

Der Anwenderteil 11 ist so konstruiert, dass er nicht missbraucht werden kann zum wilden Befüllen der Flaschen durch Fremde. Der Steuerstift 16 im Anwenderteil 11 kann das Ventil im Flaschenteil 10 nur so weit öffnen, um Gas aus der Flasche zu entnehmen, nicht aber um Gas in die Flasche zu pressen. Dies wird mit dem Umschaltkolben 29 unterhalb des Kegels 28 im Flaschenteil 10 verhindert. Zudem ist der Nachbau des codierten Anschlusses viel komplizierter als das Anfertigen eines Gewindes.

Der Flaschenteil 10 hat oben den Abschlussdeckel 40, welcher den Anschluss optisch ansprechend abrundet. Der Abschlussdeckel 40 wird durch eine Lochscheibe 39 und eine erste Deckelhaltefeder 25b in dieser Position festgehalten. Dadurch ist der O-Ring 17 geschützt und die Verschmutzungsgefahr auf ein Minimum reduziert. Um bei einer eventuellen Undichtheit des Ventils nicht zu einem gefährlichen Projektil zu werden, kann sich der Abschlussdeckel 40 gegen eine zweite Deckelhaltefeder 25a so weit nach aussen bewegen, bis zwischen O-Ring 17 und Abschlussdeckel 40 Platz frei wird zum Ablassen des Überdrucks.

Um die Öffnungskraft des Ventils in Grenzen zu halten und trotzdem hohen Gasdurchsatz zu gewährleisten, ist für das Ventil ein zweistufiger, koaxialer Vierkantkolben 37 eingebaut, welcher sich von geringem bis zu grossem Durchlass fein und vibrationsfrei regulieren lässt. Bei sehr grossem Gasdurchsatz und zum Befüllen öffnet sich automatisch die zweite, integrierte Stufe.

Der wasserempfindliche Einsatz 33 macht die Flasche für den Anwender nach Eindringen von Wasser unbrauchbar. Dieser Einsatz 33 im Kegel 28, welcher unter ständiger Belastung der Schliessfeder 30 steht, wird durch eintretendes Wasser aufgeweicht. Dadurch fährt der Kegel 28 nach oben und verschliesst den Durchgang für das Gas. Im Gaswerk kann der Füllkopf (nicht dargestellt) nicht genügend Öffnungshub ausführen, der automatische Füllprozess meldet einen Fehler und die Flasche muss geprüft werden. Ein Werkzeug (nicht dargestellt), bestehend aus einem Anwenderteil mit maximalem Öffnungshub, gewährleistet das gefahrlose Entleeren der Flasche, um das Ventil auszubauen und die Flasche zu reinigen und zu trocknen. Das Ventil wird nach Reinigen und Auswechseln des Einsatzes wieder verwendet.

Oben beschriebener Kegel 28 übernimmt gleichzeitig die Funktion eines Sicherheitsabschlusses für den Fall, dass eine Flasche mit oder ohne Anwenderteil 11 unglücklich stürzt und dabei alles, was aus dem Flaschenhals ragt, wegbricht.

Der Umschaltkolben 29 im unteren Teil des Flaschenteils 10 verhindert das Befüllen der Flasche mit dem Öffnungshub des Anwenderteils 11. Auch der Füllkopf kann die Sperre nicht öffnen, nachdem die Wassersicherung angesprochen hat. Beim Anschluss einer ordnungsgemässen Flasche zum Füllen gibt dieser Umschaltkolben 29 den Weg in die Flasche frei. Dadurch gelangt das Gas am zuunterst eingebauten Sintermetallfilter 31 vorbei direkt in die Flasche. Um das Gas beim Füllen nicht durch den Filter strömen zu lassen, ist im Gehäuse der Schliessfeder die Rückschlagventilkugel 32 eingebaut.

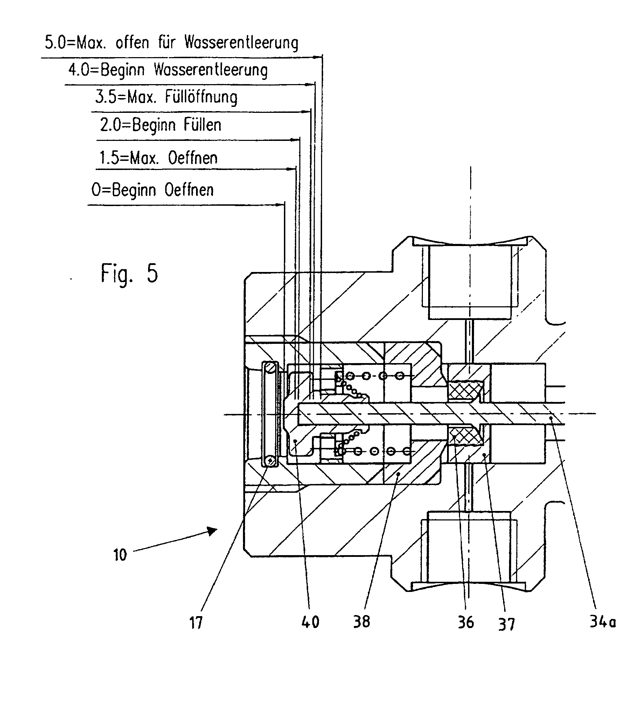

Das beschriebene Schnellanschlusssytem zeichnet sich insoweit durch die folgenden Merkmale aus:
- Die Verriegelung erfolgt mittels Verriegelungskugeln 20, welche nicht in eine Nute eingreifen, sondern in Senkungen 22 mit bestimmten Positionen. Stimmen alle Positionen von Flaschenteil 10 und Anwenderteil 11 überein, können die Kugeln einrücken und kann der Verriegelungsring 19 in die verriegelte Position geschoben werden.
- Die Verriegelungskugeln sind mit System eingeteilt in einen oder mehrere Ringe, welche einen Abstand zueinander aufweisen, der grösser ist als der Kugeldurchmesser, zur Erreichung höherer Festigkeit und einer grösseren Anzahl Codes. Bei zwei Ringen mit einer Aufteilung in zwei mal 180° (Anwenderteil 11 lässt sich auf Umschlag aufstecken) ergeben sich z. B. 12544 Codes mit total 12 Verriegelungskugeln.
- Das Schnellanschlusssystem kann unabhängig vom Systemdruck ohne Kraft angeschlossen werden.
- Das Schnellanschlusssystem hat eine integrierte Schalteinrichtung zum Öffnen / Schliessen.
- Das Schnellanschlusssystem hat einen als Kolben ausgebildeten Anschlussnippel 41, welcher einen dichten Anschluss durch die Kraft mittels innerer Druckbeaufschlagung beim Betätigen der Schalteinrichtung sicherstellt, und zwar unter Verwendung des Gasdruckes im System.
- Das Schnellanschlusssystem hat eine Sicherheitseinrichtung, wonach der Anwenderteil 11 erst nach Schliessen und Entlasten der Verbindung über den Verbraucher abgenommen werden kann. Damit wird verhindert, dass brennbare oder giftige Gase unkontrolliert in die Umgebung gelassen werden (selbst wenn unter Anwendung von grosser Kraft am Verriegelungsring 19 der Anwenderteil 11 direkt abgenommen wird, besteht dabei keine Gefahr; der Kegel 28 schliesst die Flasche automatisch).
- Das Schnellanschlusssystem hat einen Flaschenteil 10 mit verschliessenden Bauteilen 28, welche unterhalb einer eventuellen Bruchstelle im Hals der Flasche integriert sind. Damit kann das unkontrollierte Ausströmen von Gas unter hohem Druck auch bei abgebrochenem Ventil verhindert werden.
- Eine Wasserdetektionseinrichtung (33) im Flaschenteil 10 lässt Flaschen erkennen, welche beim Anwender trotz anderer Vorsichtsmassnahmen Wasser ins Innere eindringen liessen.
- Es ist ein Druckreduzierventil mit zwei unterschiedlich grossen, koaxial angeordneten Dichtkanten vorgesehen. Dies verhindert einen grossen Druckanstieg beim Entspannen, lässt jedoch grossen Durchfluss zu für den Verbraucher und den Füllvorgang.
- Es wird ein Schutz vor Fremdbefüllung dadurch erreicht, dass das Entnehmen und Einfüllen von Gas verschiedene Anwenderteile voraussetzt, die durch gezielte Öffnungshübe die Funktionen "Oeffnen", "Füllen", "Entnehmen" und "Wasserentleerung" ermöglichen, wie dies in Fig. 5 dargestellt ist.
- Es ist ein Überdruckventil 44 vorgesehen, welches in Kombination mit der Regelfeder 45 arbeitet. Übersteigt der Druck den eingestellten Wert, bewegt sich der Regelkolben 46 nach oben bis zum Anschlag. Steigt der Druck weiter, wird das Überdruckventil 44 gegen die Regelfederkraft geöffnet und gelangt nach aussen. Die wirksame Fläche des Überdruckventils muss um den Faktor kleiner sein, um welchen der Überdruck den Regeldruck überschreiten darf. Auf diese Weise passt sich der Überdruck dem Regeldruck in idealer Weise an, was bei universellen Ventilen mit grossem Arbeitsdruckbereich wichtig sein kann.

Ein Ausführungsbeispiel für ein in den äusseren Abmessungen verkleinertes und vereinfachtes Schnellanschlusssystem (Miniaturschnellanschlusssystem) nach der Erfindung ist (analog zu den Fig. 1 und 2) in den Fig. 3, 4, 4a und 4b wiedergegeben, wobei gleichartige Teile mit gleichen Bezugszeichen bezeichnet sind. Auch hier sind ein Flaschenteil 12 und ein aufsteckbarer Anwenderteil 13 vorhanden, die mit einem Druckeinstellring 15, einer Regelfeder 45, einem Ueberdruckventil 44, einem Regelkolben 46, einem Steuerstift 16, einem Anschlussnippel 41, einem O-Ring 17, einem Ventilstift 34b, einer Ventilkugel 35b, Verriegelungskugeln 20 etc. ausgerüstet sind. Zum Öffnen/Schliessen und Verriegeln ist hier ein durch Drehen betätigter kombinierter Verriegelungs- und Schaltring 43 vorgesehen, wobei direkt über die codierten Verriegelungskugeln 20 die notwendige Anschluss- und Öffnungskraft durch Drehen des kombinierten Verriegelungs- und Schaltrings 43 aufgebracht wird (Fig. 4a, b).
Die Verriegelung erfolgt wiederum mittels Verriegelungskugeln 20, welche nicht in eine Nute eingreifen, sondern in Senkungen 22 mit bestimmten Positionen einrücken. Stimmen alle Positionen von Flaschenteil 12 und Anwenderteil 13 überein, können die Verriegelungskugeln 20 durch Drehen des Verriegelungs- und Schaltrings 43 in die verriegelte Position in die Senkungen 22 gedrückt werden, wobei die notwendige Öffnungskraft direkt durch Drehen erzeugt wird. Im letzten Teil der Drehung wird die Ventilkugel 35b (Fig. 3) des Flaschenteils 12 durch den Steuerstift 16 vom Anwenderteil 13 geöffnet.

Durch das Anbringen von codierten Kugeln in nur einer Ebene/Ring wird (bei einer geringen Anzahl Codes) eine kompakte Codierung ermöglicht. Eine erweiterte Anzahl Codes lässt sich durch Anbringen eines weiteren Coderinges aus Verriegelungskugeln erreichen, welcher aus Platzgründen weniger vom ersten Codering beabstandet ist als der Kugeldurchmesser. Durch diese Massnahme steigt die Anzahl möglicher Codes bei gleichbleibender Baugrösse z. B. von 4 auf 32 bei total 6 Verriegelungskugeln.

Eine "Overflow"-Sicherung lässt sich durch eine federbelastete Overflowkugel 42 erzielen, welche bei zu grossem Durchfluss den Austritt von Gas, unterhalb einer eventuellen Bruchstelle im Hals der Flasche, unterbricht.

### BEZUGSZEICHENLISTE

- 10,12: Flaschenteil
- 11,13: Anwenderteil
- 14: Betätigungshebel
- 15: Druckeinstellring
- 16: Steuerstift
- 17: O-Ring
- 18: Unterer Teil des Anwenderteils
- 19: Verriegelungsring
- 20: Verriegelungskugel
- 21: Bohrung für Verriegelungskugel
- 22: Senkung für Verriegelungskugel
- 23a,23b: Indexierungslappen
- 24a,24b: Fläche für Schlüsselweite
- 25a,25b: Deckelhaltefeder
- 26a,26b: Bohrung für Druckindikator und Berstscheibe
- 27: Hauptstück (Flaschenteil)
- 28: Kegel
- 29: Umschaltkolben
- 30: Schliessfeder
- 31: Sintermetallfilter
- 32: Rückschlagventilkugel
- 33: Wasserempfindlicher Einsatz
- 34a: Ventilstift mit Kegelpartie
- 34b: Ventilstift (im System der Fig. 3)
- 35a: Kegelpartie (im System der Fig. 1)
- 35b: Ventilkugel (im System der Fig. 3)
- 36: Dichtungsring
- 37: Vierkantkolben
- 38: Ring mit oberer Dichtkante
- 39: Lochscheibe
- 40: Abschlussdeckel
- 41: Anschlussnippel
- 42: Overflowkugel
- 43: Kombinierter Verriegelungs- und Schaltring
- 44: Überdruckventil
- 45: Regelfeder
- 46: Regelkolben

## Patentansprüche

1. Schnellanschlusssystem zum lösbaren Anschliessen eines Verbrauchers an eine Quelle für ein unter Druck stehendes Medium, insbesondere eine Gasflasche, umfassend einen ersten Teil (10, 12), welcher mit der Quelle fest verbunden ist, sowie einen zweiten Teil (11, 13), welcher mit dem Verbraucher in Verbindung steht und zum Anschliessen des Verbrauchers an die Quelle mit dem ersten Teil (10, 12) in einer Verbindungsachse lösbar und einrastend verbunden werden kann, **dadurch gekennzeichnet, dass** zum Verriegeln und gleichzeitigen Codieren der Verbindung an einem der beiden Teile (10, 12; 11, 13) mehrere Verriegelungskugeln (20) in einer vorgegebenen Anordnung verteilt quer zur Verbindungsachse verschiebbar gelagert sind, dass an dem anderen Teil (11, 13; 10, 12) einzelne Senkungen (22) vorgesehen sind, welche bei zwei zueinander passenden Teilen (10, 12; 11, 13) dieselbe Anzahl und Anordnung aufweisen wie die Verriegelungskugeln (20) und in welche die Verriegelungskugeln (20) jeweils einrücken, wenn zwei zueinander passende Teile (10, 12 bzw. 11, 13) miteinander verbunden werden, und dass ein Verriegelungselement (19, 43) vorgesehen ist, mit welchem die in die Senkungen (22) eingerückten Verriegelungskugeln (20) gegen ein Ausrücken verriegelbar sind.

2. Schnellanschlusssystem nach Anspruch 1, **dadurch gekennzeichnet, dass** der erste Teil (10, 12) an seinem der Quelle abgewandten Ende einen zur Verbindungsachse konzentrischen zylindrischen Abschnitt aufweist, in dessen Umfangsfläche die Senkungen (22) in radialer Richtung eingebracht sind, dass der zweite Teil (11, 13) an seinem der Quelle zugewandten Ende einen zur Verbindungsachse konzentrischen hohlzylindrischen Abschnitt aufweist, welcher über den zylindrischen Abschnitt des ersten Teiles (10, 12) geschoben werden kann und welcher radiale Bohrungen (21) zur Aufnahme der Verriegelungskugeln (20) umfasst, und dass als Verriegelungselement ein Verriegelungsring (19, 43) vorgesehen ist, welcher den hohlzylindrischen Abschnitt des zweiten Teiles (11, 13) konzentrisch umschliesst, und welcher in einer ersten Stellung ein radiales Ausrücken der Verriegelungskugeln (20) aus den Senkungen (22) ermöglicht und in einer zweiten Stellung ein radiales Ausrücken der Verriegelungskugeln (20) aus den Senkungen (22) verhindert.

3. Schnellanschlusssystem nach Anspruch 2, **dadurch gekennzeichnet, dass** die Verriegelungskugeln (20) auf einem Kreis um die Verbindungsachse angeordnet sind.

4. Schnellanschlusssystem nach Anspruch 2, **dadurch gekennzeichnet, dass** die Verriegelungskugeln (20) auf mehreren in Richtung der Verbindungsachse hintereinander liegenden Kreisen um die Verbindungsachse angeordnet sind, und dass die korrespondierenden Verriegelungskugeln (20) verschiedener Kreise nach einem vorgegebenen Schliessplan angeordnet sind.

5. Schnellanschlusssystem nach einem der Ansprüche 2 bis 4, **dadurch gekennzeichnet, dass** an den beiden Teilen (10, 12; 11, 13) Indexierungsmittel (23a,b; 24a,b) vorgesehen sind, welche sicherstellen, dass die beiden Teile (10, 12; 11, 13) nur in bestimmten Winkelstellungen bezüglich einer Drehung um die Verbindungsachse miteinander verbindbar sind.

6. Schnellanschlusssystem nach Anspruch 5, **dadurch gekennzeichnet, dass** die Indexierungsmittel zwei gegenüberliegende parallele Indexierungslappen (23a,b) am zweiten Teil (11, 13) und zwei korrespondierende Flächen (24a,b) am ersten Teil (10, 12) umfassen.

7. Schnellanschlusssystem nach einem der Ansprüche 1 bis 6, **dadurch gekennzeichnet, dass** die Quelle eine im wesentlichen zylindrische Gasflasche ist, und dass der erste Teil ein Flaschenteil (10, 12) ist, welcher mittels eines Gewindes in den Kopfteil der Gasflasche einschraubbar ist, derart dass die Verbindungsachse und die Zylinderachse der Gasflasche zusammenfallen.

8. Schnellanschlusssystem nach Anspruch 7, **dadurch gekennzeichnet, dass** das System eine Vorrichtung zur Regelung bzw. Reduzierung des am verbraucherseitigen Ausgang anstehenden Arbeitsdruckes aufweist, welche Vorrichtung ein Ventil (34a, 35a, 35b, 36, 37, 38) sowie mit dem Ventil (34a, 35a, 35b; 36, 37, 38) zusammenwirkende Regelungsmittel (45, 46) umfasst, dass das Ventil (34a, 35a, 35b; 36, 37, 38) im ersten Teil (10, 12) angeordnet ist und die Regelungsmittel (45, 46) im zweiten Teil (11, 13) untergebracht sind, und dass die Regelungsmittel (45, 46) über einen aus dem zweiten Teil (11, 13) in den ersten Teil (10, 12) hineinragenden Steuerstift (16) mit dem Ventil (34a, 35a, 35b; 36, 37, 38) in Wirkverbindung stehen.

9. Schnellanschlusssystem nach Anspruch 8, **dadurch gekennzeichnet, dass** die Regelungsmittel eine Regelfeder (45) und einen Regelkolben (46) umfassen, welcher gegen den Druck der Regelfeder (45) vom Arbeitsdruck beaufschlagt wird, und dass die Regelfeder (45) auf den Steuerstift (16) einwirkt.

10. Schnellanschlusssystem nach Anspruch 9, **dadurch gekennzeichnet, dass** die Vorspannung der Regelfeder (45) und damit der Arbeitsdruck über einen Verstellmechanismus mit einem Gewinde mittels eines am zweiten Teil (11, 13) drehbar angeordneten Einstellringes (15) einstellbar ist.

11. Schnellanschlusssystem nach einem der Ansprüche 8 bis 10, **dadurch gekennzeichnet, dass** das Ventil einen Dichtungsring (36) umfasst, welcher durch Druck aus der Gasflasche sowie durch den über einen Ventilstift mit Kegelpartie (34a) übertragenen Druck einer zusätzlichen Schliessfeder (30) gegen einen mit einer Dichtkante versehenen Ring (38) gedrückt wird.

12. Schnellanschlusssystem nach einem der Ansprüche 8 bis 11, **dadurch gekennzeichnet, dass** das Ventil einen in der Verbindungsachse liegenden, von ausserhalb des ersten Teiles (10, 12) zugänglichen Ventilstift (34a,b) umfasst, über welchen die Regelungsmittel (45, 46) mittels des Steuerstiftes (16) auf das Ventil einwirken.

13. Schnellanschlusssystem nach Anspruch 12, **dadurch gekennzeichnet, dass** an dem dem Steuerstift (16) zugewandten Ende des Ventilstiftes ein Abschlussdeckel (40) angeordnet ist, welcher das darunterliegende Ventil (34a, 35a, 35b, 36, 37, 38) vor Verschmutzung schützt.

14. Schnellanschlusssystem nach einem der Ansprüche 8 bis 13, **dadurch gekennzeichnet, dass** im zweiten Teil (11, 13) ein Ueberdruckventil (44) angeordnet ist, dass die Regelungsmittel eine Regelfeder (45) umfassen, und dass das Ueberdruckventil (44) gegen die Kraft der Regelfeder (45) öffnet, derart, dass das Ueberdruckventil (44) durch die Kraft der Regelfeder (45) eingestellt wird.

15. Schnellanschlusssystem nach einem der Ansprüche 8 bis 14, **dadurch gekennzeichnet, dass** am zweiten Teil (11) eine von aussen betätigbare, auf den Steuerstift (16) einwirkende Schalteinrichtung (14) vorgesehen ist, mit welcher das Ventil (34a, 35a, 35b, 36, 37, 38) geöffnet bzw. geschlossen werden kann.

16. Schnellanschlusssystem nach einem der Ansprüche 8 bis 15, **dadurch gekennzeichnet, dass** im zweiten Teil (11) ein als Kolben ausgebildeter Anschlussnippel (41) vorgesehen ist, welcher nach dem Verbinden der beiden Teile (10, 11) und dem Oeffnen des Ventils (34a, 35a, 35b, 36, 37, 38) durch den Arbeitsdruck nach aussen abdichtend gegen eine Dichtung (17) am ersten Teil (10) gepresst wird.

17. Schnellanschlusssystem nach einem der Ansprüche 8 bis 16, **dadurch gekennzeichnet, dass** der mit dem Steuerstift (16) des zweiten Teils (11) erreichbare Oeffnungshub des Ventils (34a, 35a, 35b, 36, 37, 38) begrenzt ist, und dass innerhalb des in der Gasflasche befindlichen Endes des ersten Teils (10, 12) ein mit dem Ventil (34a, 35a, 35b, 36, 37, 38) in Wirkverbindung stehender Umschaltkolben (29) angeordnet ist, welcher ein Befüllen der Gasflasche nur dann ermöglicht, wenn das Ventil (34a, 35a, 35b, 36, 37, 38) einen den Oeffnungshub deutlich übersteigenden Hub durchläuft.

18. Schnellanschlusssystem nach Anspruch 17, **dadurch gekennzeichnet, dass** in der Wirkverbindung zwischen dem Ventil (34a, 35a, 35b, 36, 37, 38) und dem Umschaltkolben (29) ein wasserempfindlicher Einsatz (33) vorgesehen ist, welcher ein Oeffnen des Umschaltkolbens (29) zum Befüllen der Flasche generell verhindert, wenn er mit Wasser in Berührung gekommen ist.

19. Schnellanschlusssystem nach Anspruch 18, **dadurch gekennzeichnet, dass** zusätzlich ein Ventilmechanismus (28) vorgesehen ist, welcher die Gasflasche verschliesst, wenn der wasserempfindliche Einsatz (33) mit Wasser in Berührung kommt.

20. Schnellanschlusssystem nach einem der Ansprüche 8 bis 19, **dadurch gekennzeichnet, dass** im ersten Teil (10, 12) zwischen Ventil (34a,35a, 35b; 36, 37, 38) und Druckgasflasche nach aussen gehende Bohrungen (26a,b) für einen Druckindikator und/oder eine Berstscheibe vorgesehen sind.

21. Schnellanschlusssystem nach einem der Ansprüche 1 bis 6, **dadurch gekennzeichnet, dass** das Verriegelungselement ein durch Drehen betätigter kombinierter Verriegelungs- und Schaltring (43) ist, derart, dass direkt über die Verriegelungskugeln 20 die notwendige Anschluss- und Öffnungskraft durch Drehen des kombinierten Verriegelungs- und Schaltrings 43 aufgebracht wird.

22. Schnellanschlusssystem nach einem der Ansprüche 1 bis 21, **dadurch gekennzeichnet, dass** in dem ersten Teil (10, 12) an dem der Quelle zugewandten Ende Sicherheitsverschlussmittel (28, 42) angeordnet sind, welche ein Ausströmen des unter Druck stehenden Mediums in jedem Fall selbsttätig unterbinden, wenn im Schnellanschlusssystem ein Defekt auftritt.

23. Schnellanschlusssystem nach Anspruch 22, **dadurch gekennzeichnet, dass** die Sicherheitsverschlussmittel einen Kegel (28) umfassen, welcher im Falle eines Defektes in Strömungsrichtung dichtend gegen einen entsprechenden Sitz gepresst wird.

24. Schnellanschlusssystem nach Anspruch 22, **dadurch gekennzeichnet, dass** die Sicherheitsverschlussmittel eine Overflowkugel (42) umfassen, welche im Falle eines Defektes in Strömungsrichtung dichtend gegen einen entsprechenden Sitz gepresst wird.

## Claims

1. Quick connecting system for releasably connecting a consumer to a source for a medium under pressure, in particular a gas cylinder, comprising a first part (10, 12) which is firmly connected to the source and a second part (11, 13) which is connected to the consumer and, for connecting the consumer to the source, can be connected to the first part (10, 12) in a connection axis in a releasable and latching manner, **characterized in that**, for locking and simultaneously coding the connection, a plurality of locking balls (20) are mounted in a predetermined arrangement in a distributed manner on one of the two parts (10, 12; 11, 13) in such a way as to be displaceable transversely to the connection axis, **in that** individual recesses (22) are provided on the other part (11, 13; 10, 12) which, when two parts (10, 12; 11, 13) match one another, have the same number and arrangement as the locking balls (20) and in which the locking balls (20) engage in each case when two parts (10, 12 or 11, 13) matching one another are connected to one another, and **in that** a locking element (19, 43) is provided with which the locking balls (20) engaged in the recesses (22) can be locked against disengagement.

2. Quick connecting system according to Claim 1, **characterized in that** the first part (10, 12), at its end remote from the source, has a cylindrical section which is concentric to the connection axis and in whose circumferential surface the recesses (22) are incorporated in the radial direction, **in that** the second part (11, 13), at its end facing the source, has a hollow-cylindrical section which is concentric to the connection axis, can be pushed over the cylindrical section of the first part (10, 12) and comprises radial holes (21) for accommodating the locking balls (20), and **in that** provided as locking element is a locking ring (19, 43) which concentrically encloses the hollow-cylindrical section of the second part (11, 13) and which permits radial disengagement of the locking balls (20) from the recesses (22) in a first position and prevents radial disengagement of the locking balls (20) from the recesses (22) in a second position.

3. Quick connecting system according to Claim 2, **characterized in that** the locking balls (20) are arranged on a circle around the connection axis.

4. Quick connecting system according to Claim 2, **characterized in that** the locking balls (20) are arranged on a plurality of circles around the connection axis which lie one behind the other in the direction of the connection axis, and **in that** the corresponding locking balls (20) of various circles are arranged according to a predetermined closing plan.

5. Quick connecting system according to one of Claims 2 to 4, **characterized in that** indexing means (23a, b; 24a, b) are provided on the two parts (10, 12; 11, 13), which indexing means (23a, b; 24a, b) ensure that the two parts (10, 12; 11, 13) can be connected to one another only in certain angular positions with respect to a rotation about the connection axis.

6. Quick connecting system according to Claim 5, **characterized in that** the indexing means comprise two opposite parallel indexing lobes (23a, b) on the second part (11, 13) and two corresponding surfaces (24a, b) on the first part (10, 12).

7. Quick connecting system according to one of Claims 1 to 6, **characterized in that** the source is an essentially cylindrical gas cylinder, and **in that** the first part is a cylinder part (10, 12) which can be screwed by means of a thread into the head part of the gas cylinder in such a way that the connection axis and the cylinder axis of the gas cylinder coincide.

8. Quick connecting system according to Claim 7, **characterized in that** the system has an arrangement for regulating or reducing the working pressure applied at the consumer-side outlet, which arrangement comprises a valve (34a, 35a, 35b, 36, 37, 38) and regulating means (45, 46) interacting with the valve (34a, 35a, 35b; 36, 37, 38), **in that** the valve (34a, 35a, 35b; 36, 37, 38) is arranged in the first part (10, 12) and the regulating means (45, 46) are accommodated in the second part (11, 13), and **in that** the regulating means (45, 46) are in operative connection with the valve (34a, 35a, 35b; 36, 37, 38) via a control pin (16) projecting from the second part (11, 13) into the first part (10, 12).

9. Quick connecting system according to Claim 8, **characterized in that** the regulating means comprise a regulating spring (45) and a regulating piston (46), to which the working pressure is applied against the pressure of the regulating spring (45), and **in that** the regulating spring (45) acts on the control pin (16).

10. Quick connecting system according to Claim 9, **characterized in that** the preloading of the regulating spring (45) and thus the working pressure can be set via an adjusting mechanism having a thread by means of a setting ring (15) rotatably arranged on the second part (11, 13).

11. Quick connecting system according to one of Claims 8 to 10, **characterized in that** the valve comprises a sealing ring (36) which, by pressure from the gas cylinder and by the pressure of an additional closing spring (30), this pressure being transmitted via a valve pin having a conical portion (34a), is pressed against a ring (38) provided with a sealing edge.

12. Quick connecting system according to one of Claims 8 to 11, **characterized in that** the valve comprises a valve pin (34a, b) which lies in the connection axis and is accessible from outside the first part (10, 12) and via which the regulating means (45, 46) act on the valve by means of the control pin (16).

13. Quick connecting system according to Claim 12, **characterized in that** an end cap (40) is arranged on that end of the valve pin which faces the control pin (16), this end cap (40) protecting the underlying valve (34a, 35a, 35b, 36, 37, 38) from contamination.

14. Quick connecting system according to one of Claims 8 to 13, **characterized in that** a pressure relief valve (44) is arranged in the second part (11, 13), **in that** the regulating means comprise a regulating spring (45), and **in that** the pressure relief valve (44) opens against the force of the regulating spring (45) in such a way that the pressure relief valve (44) is set by the force of the regulating spring (45).

15. Quick connecting system according to one of Claims 8 to 14, **characterized in that** a switching device (14) which can be actuated from outside and acts on the control pin (16) and with which the valve (34a, 35a, 35b, 36, 37, 38) can be opened or closed is provided on the second part (11).

16. Quick connecting system according to one of Claims 8 to 15, **characterized in that** a connecting nipple (41) designed as a piston is provided in the second part (11), which connecting nipple (41), after the connection of the two parts (10, 11) and the opening of the valve (34a, 35a, 35b, 36, 37, 38), is pressed outwards by the working pressure in a sealing manner against a seal (17) on the first part (10).

17. Quick connecting system according to one of Claims 8 to 16, **characterized in that** the opening stroke, which can be achieved with the control pin (16) of the second part (11), of the valve (34a, 35a, 35b, 36, 37, 38) is limited, and **in that** a changeover piston (29) in operative connection with the valve (34a, 35a, 35b, 36, 37, 38) is arranged inside that end of the first part (10, 12) which is located in the gas cylinder, which changeover piston (29) permits filling of the gas cylinder only when the valve (34a, 35a, 35b, 36, 37, 38) performs a stroke markedly exceeding the opening stroke.

18. Quick connecting system according to Claim 17, **characterized in that** a water-sensitive insert (33) is provided in the operative connection between the valve (34a, 35a, 35b, 36, 37, 38) and the changeover piston (29), this water-sensitive insert (33) generally preventing opening of the changeover piston (29) for filling the cylinder if it comes into contact with water.

19. Quick connecting system according to Claim 18, **characterized in that** a valve mechanism (28) which closes the gas cylinder if the water-sensitive insert (33) comes into contact with water is additionally provided.

20. Quick connecting system according to one of Claims 8 to 19, **characterized in that** holes (26a, b) passing outwards for a pressure indicator and/or a bursting disc are provided in the first part (10, 12) between valve (34a, 35a, 35b; 36, 37, 38) and pressure gas cylinder.

21. Quick connecting system according to one of Claims 1 to 6, **characterized in that** the locking element is a combined locking and switching ring (43), actuated by turning, such that the requisite connecting and opening force is applied directly via the locking balls 20 by turning the combined locking and switching ring (43).

22. Quick connecting system according to one of Claims 1 to 21, **characterized in that** safety closure means (28, 42) are arranged in the first part (10, 12) at the end facing the source, which safety closure means (28, 42) always automatically prevent an outflow of the medium under pressure if a defect occurs in the quick connecting system.

23. Quick connecting system according to Claim 22, **characterized in that** the safety closure means comprise a cone (28) which is pressed in the flow direction in a sealing manner against a corresponding seat in the event of a defect.

24. Quick connecting system according to Claim 22, **characterized in that** the safety closure means comprise an overflow ball (42) which is pressed in the flow direction in a sealing manner against a corresponding seat in the event of a defect.

## Revendications

1. Système de connexion rapide pour le raccord desserrable d'un consommateur à une source de fluide sous pression, notamment une bouteille de gaz, comprenant une première partie (10, 12) qui est connectée fixement à la source, ainsi qu'une deuxième partie (11, 13) qui est en liaison avec le consommateur et qui peut être connectée par encliquetage et de manière desserrable à la première partie (10, 12) dans un axe de connexion pour raccorder le consommateur à la source, **caractérisé en ce que** pour verrouiller et coder simultanément la connexion à l'une des deux parties (10, 12 ; 11, 13), plusieurs billes de verrouillage (20) sont montées de manière déplaçable axialement dans un agencement prédéfini et de manière répartie transversalement à l'axe de connexion, **en ce que** sur l'autre partie (11, 13 ; 10, 12) sont prévus des creux individuels (22) qui présentent, pour deux parties adaptées l'une à l'autre (10, 12 ; 11, 13) le même nombre et le même agencement que les billes de verrouillage (20)et dans lesquels les billes de verrouillage (20) s'insèrent respectivement lorsque deux parties adaptées l'une à l'autre (10, 12, respectivement 11, 13) sont connectées l'une à l'autre et **en ce qu'**un élément de verrouillage (19, 43) est prévu, avec lequel les billes de verrouillage (20) insérées dans les creux (22) peuvent être verrouillées pour les empêcher de ressortir.

2. Système de connexion rapide selon la revendication 1, **caractérisé en ce que** la première partie (10, 12) présente à son extrémité opposée à la source une portion cylindrique concentrique à l'axe de connexion, dans la surface périphérique de laquelle sont pratiqués les creux (22) dans la direction radiale, **en ce que** la deuxième partie (11, 13) présente à son extrémité opposée à la source une portion cylindrique creuse concentrique à l'axe de connexion, qui peut être poussée sur la portion cylindrique de la première partie (10, 12) et qui comprend des alésages radiaux (21) pour recevoir les billes de verrouillage (20) et **en ce que** l'on prévoit comme élément de verrouillage une bague de verrouillage (19, 43) qui entoure concentriquement la portion cylindrique creuse de la deuxième partie (11, 13) et qui permet dans une première position, aux billes de verrouillage (20) de ressortir radialement des creux (22), et dans une deuxième position, empêche aux billes de verrouillage (20) de ressortir radialement des creux (22).

3. Système de connexion rapide selon la revendication 2, **caractérisé en ce que** les billes de verrouillage (20) sont disposées sur un cercle autour de l'axe de connexion.

4. Système de connexion rapide selon la revendication 2, **caractérisé en ce que** les billes de verrouillage (20) sont disposées autour de l'axe de connexion sur plusieurs cercles situés les uns derrière les autres dans la direction de l'axe de connexion, et **en ce que** les billes de verrouillage correspondantes (20) de différents cercles sont disposées suivant un plan de verrouillage prédéfini.

5. Système de connexion rapide selon l'une quelconque des revendications 2 à 4, **caractérisé en ce que** des moyens d'indexage (23a,b ; 24a,b) sont prévus sur les deux parties (10, 12 ; 11, 13), lesquels garantissent que les deux parties (10, 12 ; 11, 13) ne peuvent être connectées l'une à l'autre que dans des positions angulaires déterminées par rapport à une rotation autour de l'axe de connexion.

6. Système de connexion rapide selon la revendication 5, **caractérisé en ce que** les moyens d'indexage comprennent deux languettes d'indexage parallèles opposées (23a,b) sur la deuxième partie (11, 13) et deux faces correspondantes (24a,b) sur la première partie (10, 12).

7. Système de connexion rapide selon l'une quelconque des revendications 1 à 6, **caractérisé en ce que** la source est une bouteille de gaz sensiblement cylindrique, et **en ce que** la première partie est une partie de bouteille (10, 12) qui peut être vissée au moyen d'un filetage dans la partie de tête de la bouteille de gaz de telle sorte que l'axe de connexion et l'axe du cylindre de la bouteille de gaz coïncident.

8. Système de connexion rapide selon la revendication 7, **caractérisé en ce que** le système présente un dispositif de régulation ou de réduction de la pression de travail existant à la sortie du côté consommateur, lequel dispositif comprend une soupape (34a, 35a, 35b, 36, 37, 38) ainsi que des moyens de régulation (45,46) coopérant avec la soupape (34a, 35a, 35b ; 36, 37, 38), **en ce que** la soupape (34a, 35a, 35b ; 36, 37, 38) est disposée dans la première partie (10, 12) et les moyens de régulation (45, 46) sont montés dans la deuxième partie (11, 13), et **en ce que** les moyens de régulation (45, 46) sont en liaison coopérante avec la soupape (34a, 35a, 35b ; 36, 37, 38) par le biais d'une tige de commande (16) pénétrant hors de la deuxième partie (11, 13) dans la première partie (10, 12).

9. Système de connexion rapide selon la revendication 8, **caractérisé en ce que** les moyens de régulation comprennent un ressort de régulation (45) et un piston de régulation (46) qui est sollicité par la pression de travail à l'encontre du ressort de régulation (45) et **en ce que** le ressort de régulation (45) agit sur la tige de commande (16).

10. Système de connexion rapide selon la revendication 9, **caractérisé en ce que** la précontrainte du ressort de régulation (45) et donc la pression de travail, peuvent être ajustés par le biais d'un mécanisme de réglage avec un filetage au moyen d'une bague d'ajustement (15) disposée de manière à pouvoir tourner sur la deuxième partie (11, 13).

11. Système de connexion rapide selon la revendication 10, **caractérisé en ce que** la soupape comprend une bague d'étanchéité (36) qui est pressée par la pression de la bouteille de gaz ainsi que par la pression transmise par le biais d'une tige de soupape avec partie conique (34a) d'un ressort de fermeture supplémentaire (30) contre une bague (38) pourvue d'une arête d'étanchéité.

12. Système de connexion rapide selon l'une quelconque des revendications 8 à 11, **caractérisé en ce que** la soupape comprend une tige de soupape (34a,b) située dans l'axe de connexion, pouvant être accessible depuis l'extérieur de la première partie (10, 12), par le biais de laquelle les moyens de régulation (45, 46) agissent au moyen de la tige de commande (16) sur la soupape.

13. Système de connexion rapide selon la revendication 12, **caractérisé en ce qu'**un couvercle de fermeture (40) est disposé à l'extrémité de la tige de soupape tournée vers la tige de commande (16), lequel protège la soupape située en dessous (34a, 35a, 35b, 36, 37, 38) contre la saleté.

14. Système de connexion rapide selon l'une quelconque des revendications 8 à 13, **caractérisé en ce qu'**une soupape de surpression (44) est disposée dans la deuxième partie (11, 13), **en ce que** les moyens de régulation comprennent un ressort de régulation (45) et **en ce que** la soupape de surpression (44) s'ouvre à l'encontre de la force du ressort de régulation (45) de telle sorte que la soupape de surpression (44) soit ajustée par la force du ressort de régulation (45).

15. Système de connexion rapide selon l'une quelconque des revendications 8 à 14, **caractérisé en ce que** l'on prévoit sur la deuxième partie (11) un dispositif de commutation (14) actionnable de l'extérieur, agissant sur la tige de commande (16), avec lequel la soupape (34a, 35a, 35b, 36, 37, 38) peut être ouverte ou fermée.

16. Système de connexion rapide selon l'une quelconque des revendications 8 à 15, **caractérisé en ce que** dans la deuxième partie (11) est prévu un raccord (41) réalisé sous forme de piston, qui, après la connexion des deux parties (10, 11) et l'ouverture de la soupape (34a, 35a, 35b, 36, 37, 38), est pressé par la pression de travail vers l'extérieur de manière étanche contre un joint d'étanchéité (17) sur la première partie (10).

17. Système de connexion rapide selon l'une quelconque des revendications 8 à 16, **caractérisé en ce que** la course d'ouverture de la soupape (34a, 35a, 35b, 36, 37, 38) pouvant être obtenue avec la tige de commande (16) de la deuxième partie (11) est limitée et **en ce qu'**à l'intérieur de l'extrémité de la première partie (10, 12) se trouvant dans la bouteille de gaz est disposé un piston d'inversion (29) en liaison coopérante avec la soupape (34a, 35a, 35b, 36, 37, 38), lequel ne permet un remplissage de la bouteille de gaz que lorsque la soupape (34a, 35a, 35b ; 36, 37, 38) effectue une course dépassant largement la course d'ouverture.

18. Système de connexion rapide selon la revendication 17, **caractérisé en ce que** l'on prévoit dans la liaison coopérante entre la soupape (34a, 35a, 35b, 36, 37, 38) et le piston d'inversion (29) un insert (33) sensible à l'eau qui empêche une ouverture du piston d'inversion (29) pour remplir la bouteille généralement lorsqu'il est venu en contact avec de l'eau.

19. Système de connexion rapide selon la revendication 18, **caractérisé en ce que** l'on prévoit en outre un mécanisme de soupape (28) qui ferme la bouteille de gaz lorsque l'insert (33) sensible à l'eau vient en contact avec de l'eau.

20. Système de connexion rapide selon l'une quelconque des revendications 8 à 19, **caractérisé en ce que** l'on prévoit dans la première partie (10, 12) entre la soupape (34a, 35a, 35b ; 36, 37, 38) et la bouteille de gaz comprimé, des alésages (26a,b) allant vers l'extérieur pour un indicateur de pression et/ou un disque de rupture.

21. Système de connexion rapide selon l'une quelconque des revendications 1 à 6, **caractérisé en ce que** l'élément de verrouillage est une bague de verrouillage et de commutation combinée (43) actionnée par rotation, de telle sorte que la force de raccordement et d'ouverture nécessaire soit appliquée directement par le biais des billes de verrouillage (20) par rotation de la bague de verrouillage et de commutation combinée (43).

22. Système de connexion rapide selon l'une quelconque des revendications 1 à 21, **caractérisé en ce que** des moyens de fermeture de sécurité (28, 42) sont disposés dans la première partie (10, 12) à l'extrémité tournée vers la source, lesquels empêchent automatiquement dans chaque cas une sortie du fluide sous pression lorsqu'une panne a lieu dans le système de connexion rapide.

23. Système de connexion rapide selon la revendication 22, **caractérisé en ce que** les moyens de fermeture de sécurité comprennent un cône (28) qui, dans le cas d'une panne, est pressé dans la direction d'écoulement de manière hermétique contre un siège correspondant.

24. Système de connexion rapide selon la revendication 22, **caractérisé en ce que** les moyens de fermeture de sécurité comprennent une bille de débordement (42) qui, dans le cas d'une panne, est pressée dans la direction d'écoulement de manière hermétique contre un siège correspondant.
